# EUROPEAN PATENT SPECIFICATION

(11) **EP 2 652 272 B1**
(45) Date of publication and mention of the grant of the patent: **28.10.2015**
(21) Application number: 11813404.8
(22) Date of filing: 14.12.2011
(51) Int. Cl.: F22B 1/02, F28D 20/00, F01K 3/00, F22B 21/00, F22B 29/06, F01K 3/16

(54) **THERMAL-ENERGY- STORAGE TANK WITH INTEGRATED STEAM GENERATOR**
WÄRMENERGIESPEICHERTANK MIT INTEGRIERTEM DAMPFERZEUGER
RÉSERVOIR DE STOCKAGE D'ÉNERGIE THERMIQUE DOTÉ D'UN GÉNÉRATEUR DE VAPEUR INTÉGRÉ

(30) Priority: 14.12.2010 IT RM20100660
(43) Date of publication of application: 23.10.2013
(73) Proprietor: Agenzia Nazionale Per Le Nuove Tecnologie, L'Energia E Lo Sviluppo Economico Sostenibile (ENEA), 00196 Roma (RM) (IT); Ansaldo Nucleare S.p.A., 16152 Genova (IT)
(72) Inventor: RINALDI, Luca, I-00152 Roma (IT); FABRIZI, Fabrizio, I-00133 Roma (IT); ALEMBERTI, Alessandro, I-16159 Genova (IT); GAGGIOLI, Walter, I-00013 Mentana (IT); ALIOTTA, Salvatore, I-93012 Gela (IT); BARBENSI, Andrea, I-16033 Lavagna (IT); TARQUINI, Pietro, I-00139 Roma (IT)
(74) Representative: Bosman, Cesare
(86) International application number: PCT/IB2011/055676
(87) International publication number: WO 2012/080970

(56) References cited:
- US-A- 5 384 489
- US-A1- 2004 182 081

## Description

### TECHNICAL FIELD

The present invention relates to a thermal-energy storage tank with integrated steam generator.

In particular, the present invention regards a tank for storing molten salts that are stratified in temperature with an integrated steam generator to which the ensuing description will make explicit reference without this implying any loss of generality.

### BACKGROUND ART

Generally, plants for producing thermal energy by using molten salts are substantially constituted by means for heating the molten salts, by a hot tank provided for keeping the molten salts at a high temperature (approximately 550°C), by a steam generator that is traversed by the salts coming from the hot tank, and by a cold tank, in which the cold molten salts (at a temperature of approximately 290°C) are stored after they have left the steam generator.

US 2004/0182081 and US 5 384 489 examplifies power plants with thermal-energy storage tanks known in the art.

As may be immediately appreciated by a person skilled in the sector, a type of plant of this sort entails the presence of numerous components, which results in a high running cost due both to maintenance and replacement of the components themselves and to maintenance of an effective and safe transport of the molten salts. In fact, the plants described above necessarily envisage the presence of numerous external pipes, in which the molten salts must be kept at a given pressure and at a given operating temperature in order not to jeopardize the effectiveness of the process as a whole.

Moreover, this type of plants entails a considerable occupation of space, which can at times render problematical, if not jeopardize, construction thereof.

There is hence felt the need to have available a component that, by using a thermovector fluid, will enable production of steam with a saving in costs and space as compared to the known art.

### DISCLOSURE OF INVENTION

The subject of the present invention is a thermal-energy storage tank for a thermovector fluid in the liquid phase, the basic characteristics of which are specified in Claim 1, and the preferred and/or auxiliary characteristics of which are specified in Claims 2-6.

A further object of the present invention is a method for producing steam, the basic characteristics of which are specified in Claim 7, and the preferred and/or auxiliary characteristics of which are specified in Claims 8-10.

### BRIEF DESCRIPTION OF THE DRAWINGS

For a better understanding of the invention an embodiment thereof is described in what follows purely by way of non-limiting illustration with the aid of the figures of the annexed drawings, wherein:
Figure 1 is a cross-sectional view of a preferred embodiment of the thermal-energy storage tank forming the subject of the present invention;
Figure 2a is a side view with parts in cross section of a preferred embodiment of the steam generator comprised in the tank of Figure 1; and
Figure 2b is a side view from an angle rotated through 90° of the steam generator of Figure 2a with parts in cross section.

### BEST MODE FOR CARRYING OUT THE INVENTION

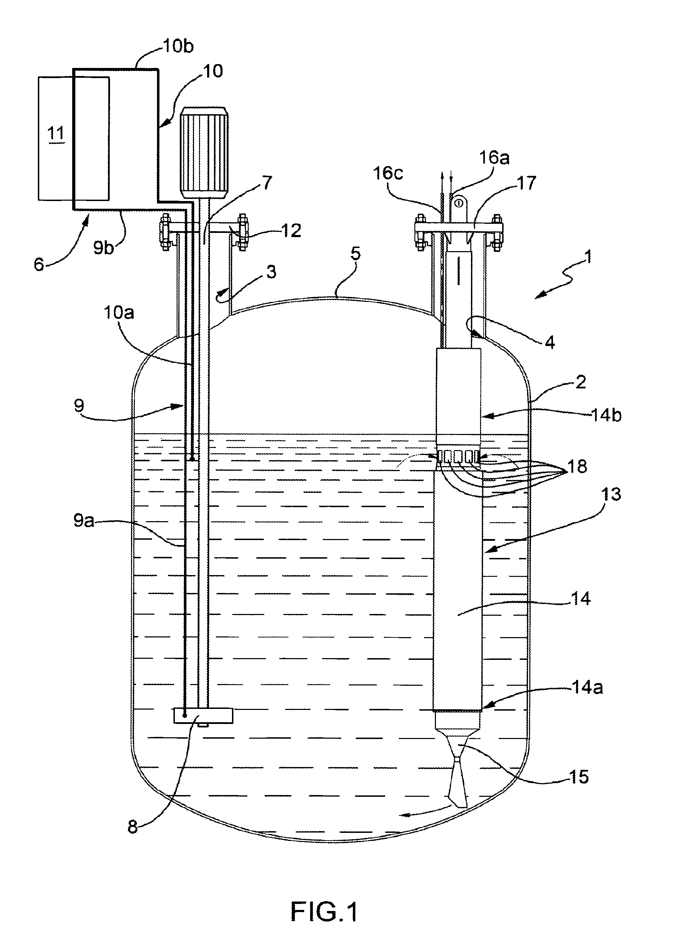

Designated as a whole by 1 in Figure 1 is a thermal-energy storage tank according to the present invention.

The tank 1 comprises a containing structure 2, which has a number of openings (a first opening 3 and a second opening 4 are shown in the figure) made in a top cap 5 thereof.

The tank 1 comprises a regenerating circuit 6 for heating a thermovector fluid and for thermal storage, which in the case in point is constituted by a mixture of molten salts constituted for 60% by sodium nitrate and for 40% by potassium nitrate, but which can be even constituted by other types of mixtures of salts or fluid a with high thermal capacity.

In what follows, by the term "cold molten salts" is meant the mixture defined above at a temperature of approximately 290°C, whilst by the term "hot molten salts" is meant the mixture defined above at a temperature of approximately 550°C.

The regenerating circuit 6 in turn comprises an intake pump 7, the intake mouth of which 8 is housed in the proximity of the bottom of the containing structure 2, a pipe 9 for intake of the cold molten salts arranged so as to traverse the first opening 3 and of which a first part 9a is housed inside and a second part 9b is housed outside the containing structure 2, a pipe 10 for pouring the hot molten salts, which is also arranged so as to traverse the first opening 3 and of which a first part 10a is housed outside and a second part 10b is housed inside the containing structure 2, and means for heating the molten salts designated as a whole by 11 and set between the intake pipe 9 and the pouring pipe 10.

The heating means 11 can be identified, by way of example, by a solar concentrator (e.g., a field of linear parabolic mirrors) or with a biomass boiler.

In particular, the intake pipe 9, the pouring pipe 10, and the set of electrical components of the pump 7 traverse a flange 12 set so as to close the first opening 3 to guarantee insulation from outside of the molten salts set inside the containing structure 2.

Moreover, by the term "cold molten salts" is meant the mixture defined above at a temperature of approximately 290°C, whereas by the term "hot molten salts" is meant the mixture defined above at a temperature of approximately 550°C.

The molten salts arrange themselves within the containing structure 2 according to a temperature gradient, whereby the cooler molten salts arrange themselves on the bottom of the containing structure and the hotter molten salts arrange themselves on the surface of the store of molten salts present in the containing structure 2.

Finally, the tank 1 comprises a steam generator 13 housed inside the containing structure 2.

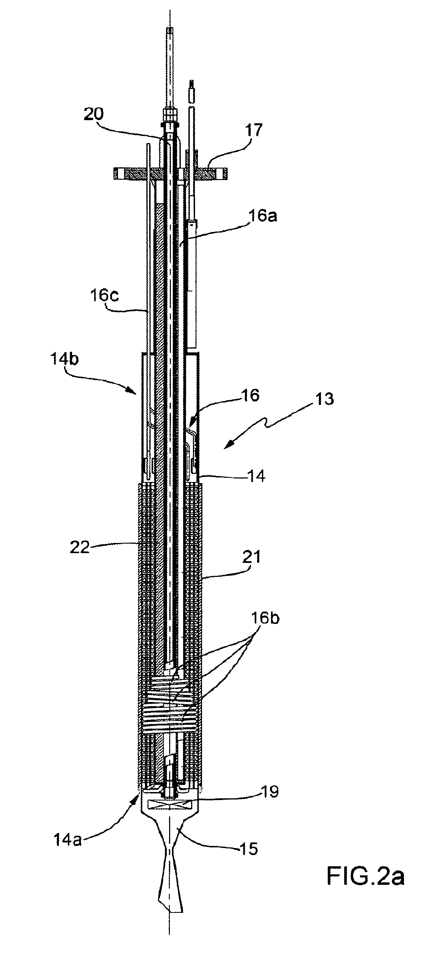

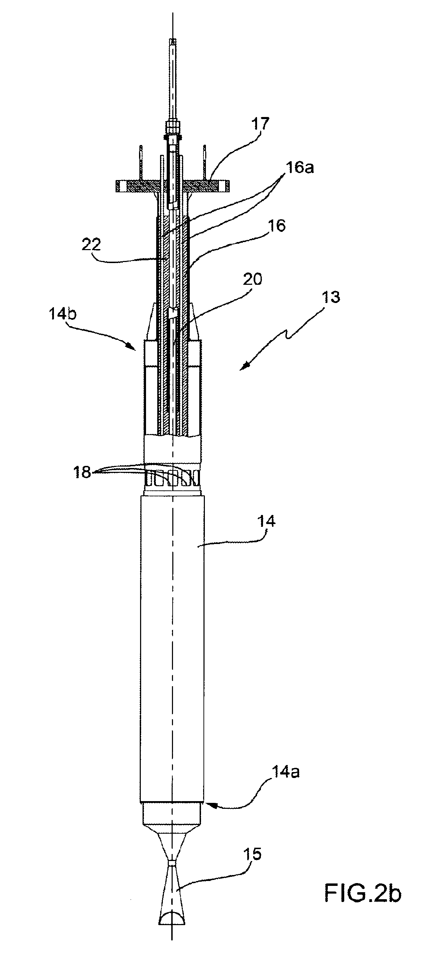

As illustrated in Figures 2a and 2b, the steam generator 13 comprises a cylindrical shell 14, practically completely immersed in use in the molten salts, a diffuser 15 connected in a fluid-tight way to a bottom end 14a of the shell 14, and three water/steam tubes 16. Each of the tubes 16 is constituted by a delivery portion 16a, from which the under-cooled water enters at a temperature of 240°C, a heat-exchange portion 16b with helical conformation, housed inside, and coaxial with, the shell 14, and a return portion 16c, through which the superheated steam comes out at a temperature of 520°C.

On account of their relative arrangement, visible in Figure 2a in cross-sectional view are a portion 16a and a portion 16c, whereas visible in Figure 2b in cross-sectional view are two portions 16a.

The portions 16c are visible both entirely and in cross-sectional view in Figure 2a.

The respective delivery portions 16a and return portions 16c traverse a flange 17 set for closing the second opening 4 in order, as described above in connection to the flange 12, to guarantee insulation of the molten salts set inside the containing structure 2 from the outside world.

Unlike what has been described above, the various delivery portions 16a and return portions 16c of the tubes 16 can be replaced, respectively, by a single delivery header and a single return header. In other words, the tube nest, in which there takes place heat exchange with the molten salts, has a first end that branches off from the delivery header for the under-cooled water and a second end that converges in a return header for the steam. In this way, both the delivery header and the return header traverse the flange 17.

In the shell 14 a plurality of openings 18 are made in the proximity of a top end 14b of the shell 14 itself. As will be described in what follows, the steam generator 13 will be housed in the containing structure 2 in such a way that the openings 18 will be at the level of the hot molten salts, and the diffuser 15 will be at the level of the cold molten salts.

In this way, the hot molten salts enter the shell 14 through the openings 18 and exit therefrom as cold molten salts from the diffuser 15 after having performed their function as primary fluid in the heat-exchange process.

Basically, the ensemble constituted by the shell 14 and the heat-exchange portions 16b defines as a whole a tube-nest heat exchanger and shell.

In the specific case, in each of the tubes 16 the delivery portion 16a extends linearly from the outside of the containing structure 2 as far as the bottom end 14a of the shell 14, the heat-exchange portion 16b extends in a helical conformation from the bottom end 14a of the shell 14 as far as the openings 18, and the return portion 16c extends in a linear conformation from the openings 18 and exits from the containing structure 2 through the flange 17 to reach the utilizer provided for the production of energy, such as, for example, a turbine.

Hence, the hot molten salts enter through the openings 18 within the shell 14 and surround the three heat-exchange portions 16b to perform thermal exchange with the water that flows therein. In particular, the molten salts flow from top downwards yielding heat to the water that flows in countercurrent from the bottom up along the heat-exchange portions 16b. The molten salts, during the process of heat exchange, are gradually cooled, thus becoming more heavier and descending towards the diffuser 15 to come out therefrom at a temperature equal to the temperature of the molten salts present at the level where the diffuser 15 itself gives out.

In order to guarantee the flow of the molten salts from the openings 18 to the diffuser 15, at least in a first initial operating step, the steam generator 13 comprises a component, which, by promoting motion of the molten salts, contributes to onset of the natural circulation thereof. According to the example illustrated in Figure 2a, said component is a propeller 19 housed upstream of the diffuser 15 and moved by an actuation rod 20, which extends axially with respect to the helical heat-exchange portions 16b and then outside the containing structure 2 through the flange 17.

The steam generator 13 further comprises a first thermal-insulation cladding 21 set around the shell 14 and a second thermal-insulation jacket 22 set inside the heat-exchange portions 16b and outside the delivery portions 16a.

The thermal-insulation jackets 21 and 22 are obtained by filling the annular gap that they create with alumina balls of 5 mm in diameter immersed in stationary molten salts. The balls of alumina, which is a good thermally insulating material to which the stationary molten salts are equivalent as regards thermal conductivity, have the purpose of improving prevention of flow of the molten salts themselves. The purpose of the insulation jackets is to insulate, respectively, the molten salts that flow within the shell 14, in order to guarantee heat exchange thereof exclusively with the water that flows within the heat-exchange portions 16b, and the water that flows in the delivery portions 16a, so that the water will not undergo a heating process during its inlet path.

The tank forming the subject of the present invention guarantees the production of superheated steam by means of a steam generator without the need to provide external circuits for inlet and outlet of the thermovector fluid.

In fact, the stratification of the molten salts, as thermovector fluid, guarantees the possibility of using a single containing structure for the hot molten salts and for the cold molten salts without the heat of the former being yielded by convection to the latter. It is thus possible to exploit the stratification in temperature of the molten salts immersing therein the steam generator with vertical development in a position such as to receive in the generator the molten salts at the level in which these are hot and release them at the level in which they are cold.

The capacity of stratification of the thermovector fluid plays an essential role also inside the steam generator. In fact, the molten salts penetrate into the shell 14 through the openings 18 and, by natural circulation in so far as they cool down and become heavier, traverse with a motion from top downwards the shell 14 itself yielding heat to the water that flows in countercurrent in the heat-exchange portions 16b. Within the steam generator 13 there is thus no need to force in any way advance of the molten salts in so far as this takes place in a natural way.

In order to prevent any convective motion that might disturb the stratification referred to above, the steam generator must be designed in such a way that the molten salts will exit from the steam generator with a temperature equal to the temperature present at the level of the diffuser from which they physically come out.

The diffuser 15 must be designed in such a way as to minimize the movements of the fluid stored on the bottom of the containing structure 2 to prevent the possible onset of undesirable motions of mixing of the thermal stratification in the stored mass.

The only external circuit provided by the tank forming the subject of the present invention is constituted by the regenerating circuit 6 whereby a constant production of hot molten salts is guaranteed. In fact, the cold molten salts are taken from the bottom of the containing structure 2 to undergo a heating treatment provided, for example, by means of a set of solar concentrators, and are then fed back into the containing structure 2 to be deposited almost on the surface of the molten salts, i.e., where these are hotter.

The tank according to the present invention can comprise a plurality of steam generators which are independent of one another and are housed in one and the same containing structure. In this way, using always a single tank in which the thermovector fluid stratifies in temperature, the production of superheated steam, and, consequently, the energy that it is possible to produce with said steam is multiplied.

Another variant as compared to what has been illustrated above which is not included in the scope of the claimed invention consists in the possibility of arranging the steam generator outside the containing structure 2, to which it is in any case connected in order to receive therefrom the thermovector fluid at a high temperature and to yield thereto the thermovector fluid that has cooled following upon heat exchange. Also in this case, the cooled thermovector fluid will be introduced into the structure 2 in a region corresponding to other stratified thermovector fluid having the same temperature.

The tank of the present invention is then provided with particular structures ("traps") set on its internal walls, in order to trap the molten salt in the vicinity of the walls themselves and prevent them from flowing, thus exploiting the good thermal-insulation properties of the stationary molten salts to provide a heat shield that will minimize the losses of heat towards the outside of the tank itself.

As may be immediately appreciated by a person skilled of the sector, in this way it will be possible to produce a high amount of energy with running and maintenance costs that are considerably reduced as compared to plants according to the known art and, at the same time, it is possible to reduce drastically the necessary overall dimensions.

As emerges from the above description the thermal-energy storage tank forming the subject of the present invention enables reduction both of the number of components (a single tank and a single molten-salt circuit) and of the pressurized apparatuses, consequently reducing both the plant costs and the corresponding problems of maintenance and/or replacement. In addition, it guarantees a greater compactness of the plant as a whole, thus leading to a better use of the necessary spaces.

## Claims

1. A thermal-energy storage tank (1) comprising a containing structure (2) designed to house a store of thermovector fluid in the liquid state and spontaneously stratified in temperature, a regenerating circuit (6) designed to draw said thermovector fluid from a bottom of said containing structure (2) for taking it out of said containing structure (2) and, once heated by means of heating means (11) that are lodged outside said containing structure (2), to deposit it in a surface portion of said store of thermovector fluid, at least one steam generator (13) comprising a heat exchanger (14, 16b) with vertical extension that is housed within said containing structure (2) and immersed in said thermovector fluid; said heat exchanger (14, 16b) having at least one top opening (18) designed for inlet of said thermovector fluid coming from said store and a bottom opening designed for outlet of said thermovector fluid (15) for its reintroduction in said store.

2. The thermal-energy storage tank (1) according to Claim 1, **characterized in that** said heat exchanger (14, 16b) is a tube-nest heat exchanger (16b) and shell (14).

3. The thermal-energy storage tank (1) according to Claim 2, **characterized in that** said steam generator (13) comprises a cylindrical shell (14) and a tube nest (16b) with helical conformation and housed entirely within said shell (14).

4. The thermal-energy storage tank (1) according to Claim 3, **characterized in that** said steam generator (13) comprises a first thermal-insulation jacket (21) set around the shell (14) for insulating thermally the thermovector fluid that flows within the shell from the store of thermovector fluid present in the containing structure, and a second thermal-insulation jacket (22) set inside the heat-exchange portions (16b) and outside the delivery portions (16a) for insulating thermally the water that flows therein from the thermovector fluid present within the shell (14).

5. The thermal-energy storage tank (1) according to any one of the preceding claims, **characterized in that** said steam generator (13) comprises a diffuser (15) connected in a fluid-tight way to a bottom end (14a) of the shell (14) and constituting said bottom opening.

6. The thermal-energy storage tank (1) according to Claim 5, **characterized in that** said steam generator (13) comprises a component (19) designed to promote motion of the molten salts for contributing to onset of natural circulation thereof.

7. A method for producing steam comprising a step of heat exchange in which water flowing within tubes from the bottom up exchanges heat with a thermovector fluid in the liquid state that flows from the top down in a shell in which said tubes are housed; said method being **characterized in that** said shell is connected at inlet and at outlet to a store of said thermovector fluid in the liquid state stratified in temperature; said thermovector fluid entering from the top at a high temperature, traversing said shell from top downwards with simultaneous yielding of heat to the water and exiting at the bottom from the shell at a lower temperature to entering said store at a level in which the stratified thermovector fluid has a temperature approximately equal to its own; said shell being set immersed within said store of thermovector fluid in the liquid state stratified in temperature; said thermovector fluid entering said shell from the top by percolation and exiting from the shell at the bottom at the temperature of the thermovector fluid present at the level at which outlet takes place.

8. The method for producing steam according to Claim 7, **characterized in that** said thermovector fluid in the liquid state is constituted by molten salts made up of a mixture of sodium nitrate and potassium nitrate.

9. The method for producing steam according to any one of the claims 7 or 8, **characterized in that** it comprises a heating step in which the thermovector fluid is in sequence:
- drawn from the bottom of said store;
- subjected to a heating process; and
- deposited in a surface portion of said store of thermovector fluid stratified in temperature.

10. The method for producing steam according to Claim 9, **characterized in that** said heating process occurs by means of a set of solar concentrators.

## Patentansprüche

1. Wärmeenergiespeicherbehälter (1) mit einer Aufnahmestruktur (2) zum Unterbringen eines Speichers für ein Thermovektorfluid in flüssigem Zustand und mit zufälliger Temperaturschichtung, einem Regenerationskreislauf (6) zum Ansaugen des Thermovektorfluids von einem Boden der Aufnahmestruktur (2), um es der Aufnahmestruktur (2) zu entnehmen und zum Absetzen in einem Oberflächenteil des Thermovektorfluidspeichers, sobald es durch Heizmittel (11), welche außerhalb der Aufnahmestruktur (2) angeordnet sind, erwärmt worden ist, mit zumindest einem Dampfgenerator (13) mit einem Wärmetauscher (14, 16b) mit vertikaler Erweiterung, welche innerhalb der Aufnahmestruktur (2) angeordnet ist und in dem Thermovektorfluid versenkt ist, wobei der Wärmetauscher (14, 16b) zumindest eine obere Öffnung (18) als Einlass für das Thermovektorfluid aufweist, welches von dem Speicher und einer Bodenöffnung als Auslass für das Thermovektorfluid (15) für dessen Wiedereinführung in den Speicher kommt.

2. Wärmeenergiespeicherbehälter (1) nach Anspruch 1, **dadurch gekennzeichnet, dass** der Wärmetauscher (14, 16) als Rohrbündelwärmetauscher (16b) und Mantel (14) ausgebildet ist.

3. Wärmeenergiespeicherbehälter (1) nach Anspruch 2, **dadurch gekennzeichnet, dass** der Dampfgenerator (13) einen zylindrischen Mantel (14) und ein helikales Rohrbündel (16b) aufweist und vollständig innerhalb der Schale (14) angeordnet ist.

4. Wärmeenergiespeicherbehälter (1) nach Anspruch 3, **dadurch gekennzeichnet, dass** der Dampfgenerator (13) eine erste wärmeisolierende Ummantelung (21) um den Mantel (14) aufweist, um das Thermovektorfluid, welches innerhalb des Mantels von dem Thermovektorfluidspeicher in der Aufnahmestruktur fließt, zu isolieren, und eine zweite wärmeisolierende Ummantelung (22) innerhalb der Wärmetauscherabschnitte (16b) und außerhalb der Abgabeabschnitte (16a) zum thermischen Isolieren des Wassers, welches hierin von dem Thermovektorfluid in dem Mantel (14) fließt, zu isolieren, aufweist.

5. Wärmeenergiespeicherbehälter (1) nach Anspruch 4, **dadurch gekennzeichnet, dass** der Dampfgenerator (13) einen Diffusor (15) aufweist, welcher flüssigkeitsdicht mit einem unteren Ende (14a) des Mantels (14) verbunden ist und eine untere Öffnung bildet.

6. Wärmeenergiespeicherbehälter (1) nach Anspruch 5, **dadurch gekennzeichnet, dass** der Dampfgenerator (13) eine Komponente (19) zum Fördern der Bewegung von geschmolzenen Salzen aufweist, um dazu beizutragen, dass eine natürliche Zirkulation derer einsetzt.

7. Verfahren zum Herstellen von Dampf mit dem Schritt des Wärmetauschens, wobei Wasser, welches innerhalb Rohren von unten nach oben fließt, Wärme mit einem Thermovektorfluid in flüssigem Zustand austauscht, welches von oben nach unten in einem Mantel, in welcher die Rohre angeordnet sind, fließt; wobei das Verfahren **dadurch gekennzeichnet ist, dass** der Mantel mit einem Einlass und einem Auslass zu dem Speicher für das Thermovektorfluid in flüssigem Zustand, welches thermisch geschichtet ist, verbunden ist; wobei das Thermovektorfluid oben bei hoher Temperatur eintritt und den Mantel von oben nach unten durchläuft unter gleichzeitiger Abgabe von Wärme an das Wasser und an dem Boden des Mantels mit einer niedrigeren Temperatur verglichen mit der zum Eintritt des Speichers, und auf einem Niveau, auf welchem das geschichtete Thermovektorfluid eine Temperatur aufweist, welche näherungsweise gleich seiner eigenen ist, verlässt; wobei der Mantel in dem Speicher für das thermisch geschichtete Thermovektorfluid in flüssigem Zustand versenkt ist; wobei das Thermovektorfluid in den Mantel von oben durch Perkolation eintritt und aus dem Mantel unten mit der Temperatur des Thermovektorfluids, welche auf dem Auslassniveau vorherrscht, austritt.

8. Verfahren zum Herstellen von Dampf nach Anspruch 7, **dadurch gekennzeichnet, dass** das Thermovektorfluid in flüssigem Zustand aus geschmolzenen Salzen aus einer Mischung aus Natriumnitrat und Kaliumnitrat besteht.

9. Verfahren zum Herstellen von Dampf nach einem der Ansprüche 7 oder 8, **dadurch gekennzeichnet, dass** es den Thermovektorfluiderwärmungsschritt in folgender Reihenfolge aufweist:
- Ansaugen von dem Boden des Speichers;
- Durchführen eines Erwärmungsprozesses; und
- Ablagern in einem Oberflächenabschnitt des Speichers für das thermisch geschichtete Thermovektorfluid.

10. Verfahren zum Herstellen von Dampf nach Anspruch 9, **dadurch gekennzeichnet, dass** der Erwärmungsschritt mittels eines Satzes an Solarkonzentratoren erfolgt.

## Revendications

1. Réservoir de stockage d'énergie thermique (1) comprenant une structure de contenant (2) conçue pour loger un stockage d'un fluide caloporteur en état liquide et spontanément stratifié en température, un circuit de régénération (6) conçu pour prélever ledit fluide caloporteur à un fond de la structure de contenant (2) pour le sortir de la structure de contenant (2) et, lorsqu'il a été chauffé à l'aide de moyens de chauffage (11) qui sont logés à l'extérieur de la structure de contenant (2), pour le déposer dans une partie de surface du stockage du fluide caloporteur, au moins un générateur de vapeur (13) comportant un échangeur de chaleur (14, 16b) avec une extension verticale qui est logée à l'intérieur ladite structure de contenant (2) et immergée dans le fluide caloporteur, l'échangeur de chaleur (14, 16b) ayant au moins une ouverture de sommet (18) conçue pour l'entrée du fluide caloporteur venant du stockage et une ouverture de fond conçue pour la sortie du fluide caloporteur (15) aux fins de sa réintroduction dans ledit stockage.

2. Réservoir de stockage d'énergie thermique (1) selon la revendication 1, **caractérisé en ce que** l'échangeur de chaleur (14, 16b) est un échangeur de chaleur à faisceau de tubes (16b) et coque (14).

3. Réservoir de stockage d'énergie thermique (1) selon la revendication 2, **caractérisé en ce que** le générateur de vapeur (13) comprend une coque cylindrique (14) et un faisceau de tubes (16b) de forme hélicoïdale et entièrement logé à l'intérieur de la coque (14).

4. Réservoir de stockage d'énergie thermique (1) selon la revendication 3, **caractérisé en ce que** le générateur de vapeur (13) comprend une première enveloppe thermo-isolante (21) posée autour de la coque (14) pour isoler thermiquement le fluide caloporteur qui coule à l'intérieur de la coque du stockage de fluide caloporteur existant dans la structure de contenant, et une seconde enveloppe thermo-isolante (22) posée à l'intérieur des parties d'échange de chaleur (16b) et à l'extérieur des parties de délivrance (16a) pour isoler thermiquement l'eau qui coule là-dedans du fluide caloporteur se trouvant à l'intérieur de la coque (14).

5. Réservoir de stockage d'énergie thermique (1) selon l'une des revendications précédentes, **caractérisé en ce que** le générateur de vapeur (13) comprend un diffuseur (15) connecté de manière étanche au fluide à une extrémité de fond (14a) de la coque (14) et constituant l'ouverture de fond.

6. Réservoir de stockage d'énergie thermique (1) selon la revendication 5, **caractérisé en ce que** le générateur de vapeur (13) comprend une composante (19) conçue pour promouvoir le mouvement de sels fondus pour contribuer à amorcer une circulation naturelle de ceux-ci.

7. Procédé de génération de vapeur comprenant une étape d'échange de chaleur à laquelle de l'eau coulant dans des tubes du fond vers le haut échange de la chaleur avec un fluide caloporteur en l'état liquide qui coule du haut vers le bas dans une coque dans laquelle les tubes sont logés, le procédé étant **caractérisé en ce que** la coque est connectée à l'entrée et à la sortie à un stockage dudit fluide caloporteur en état liquide et stratifiée en température, le fluide caloporteur entrant en haut à une température élevée, traversant ladite coque du haut vers le bas tout en transmettant en même temps de la chaleur à l'eau et sortant au fond de la coque à une température moindre pour entrer dans le stockage à un niveau où le fluide caloporteur stratifié a une température approximativement égale à la sienne, la coque étant immergée dans le stockage de fluide caloporteur en l'état liquide et stratifié en température, le fluide caloporteur entrant dans ladite coque à partir du haut par percolation et sortant de la coque au fond à la température du fluide caloporteur présent au niveau où la sortie a lieu.

8. Procédé de génération de vapeur selon la revendication 7, **caractérisé en ce que** ledit fluide caloporteur en l'état liquide est constitué de sels fondus comprenant du nitrate de sodium et du nitrate de potassium.

9. Procédé de génération de vapeur selon l'une quelconque des revendications 7 ou 8, **caractérisé en ce qu'**il comprend une étape de chauffage à laquelle le fluide caloporteur est successivement extrait du fond du stockage,
soumis à un procédé de chauffage, et
déposé dans une partie dudit stockage de fluide caloporteur stratifié en température.

10. Procédé de génération de vapeur selon la revendication 9, **caractérisé en ce que** le procédé de chauffage est effectué à l'aide d'un ensemble de focaliseurs solaires.
